# EUROPEAN PATENT SPECIFICATION

(11) **EP 2 386 438 B1**
(45) Date of publication and mention of the grant of the patent: **29.05.2013**
(21) Application number: 11165311.9
(22) Date of filing: 09.05.2011
(51) Int. Cl.: B60K 15/05

(54) **A fuel tank cover assembly**
Abdeckanordnung für einen Brennstofftank
Ensemble formant couvercle de réservoir de carburant

(30) Priority: 10.05.2010 TR 201003671
(43) Date of publication of application: 16.11.2011
(73) Proprietor: Tofas Turk Otomobil Fabrikasi Anonim Sirketi, 16369 Bursa (TR)
(72) Inventor: Arslan, Ismail, 16369, Bursa (TR)
(74) Representative: Dericioglu Kurt, Ekin

(56) References cited:
- CN-A- 101 172 460
- DE-A1- 2 410 088

## Description

### Field of the Invention

The present invention relates to a fuel tank cover assembly which enables the fuel to be filled in the fuel tank by its cover being opened in the motor vehicles.

### Background of the Invention

The motor vehicles generate the power which enables the vehicle to move by means of burning of the fuel inside the tank. The said fuel is present in the tank inside the vehicle. The tank is isolated from the outside via a cover in order to prevent the fuel from getting out of the tank and the foreign substances from going inside. In the cover systems known in the state of the art, opening process of the cover is achieved by putting the finger to the opening present on the tank cover manually or by the cover being pushed and opened slightly via a pushing spring in flat covers. And in the flat covers in closing process of the cover, the cover is locked with the help of a pin which comes out of the body after the cover is closed and a caution is taken against an intervention from outside. In cases wherein the locking process is not performed with a pin, the lock present on the screw cap located on the fuel filler pipe is locked with a switch and by this means protection is provided against dangers coming from outside.

In systems which are not automatic, the driver has to get out of the vehicle and open the fuel tank cover, and in automatic systems the pin is enabled to be opened by the driver pushing a button or pulling an arm and the cover is released by this means. Since the spring performing the opening of the cover applies a continuous repelling force to the cover when the cover is closed, deformations occur on the cover, space-profile values required to be between the vehicle's body and the cover are affected negatively. The spring pushing the cover slightly, the spring getting dirty or freezing in bad weather conditions also cause the system does not function. Also problems such as the pin located on the locking system does not center the hole on the cover and does not lock can be experienced. In systems connected to the central locking system, the driver locks the vehicle against theft while he/she is moving away from the vehicle in order to make payment. Upon the vehicle is locked, the pin on the fuel tank cover is released and cannot lock. When the gas pumper wants to close the cover after the filling process is finished, he cannot close the cover, in case he forces the cover, he can damage the pin and the system.

German patent document no DE202004005554U, an application known in the state of the art, discloses a fuel tank lid opening mechanism operating with an electromagnetic system. In the said application, an electromagnetic pusher used to open the lid is disclosed.

Document CN 101 172 460 A describes an assembly according to the preamble of claim 1.

European patent document no EP1935702, an application known in the state of the art, discloses a fuel tank cover which is locked electromagnetically. That the said electromagnetic tank cover lock can be unlocked remotely is stated in the invention described in the document

German Patent Document no DE2410088A1 discloses a lock system which enables the fuel tank cover of a vehicle to be opened and closed. Being different from the present application the said German Patent document discloses a fuel tank cover which is opened via a magnet and an electromagnet. In the present application, it is provided a fuel tank cover which can be opened and closed gradually via the electromagnet the current direction of which can be reversed. Furthermore, the external cover of the fuel tank can be both opened and closed via the electromagnet the current direction of which can be reversed, whereas a mechanism which can be opened magnetically but closed manually is disclosed in the reference document.

### Summary of the Invention

The objective of the present invention is to realize a fuel tank cover assembly which does not have problems such as not being closed or being closed with difficulty.

Another objective of the present invention is to realize a fuel tank cover assembly which does not require the driver to get out of the vehicle to open it.

A further objective of the present invention is to realize a fuel tank cover assembly which is easy to mount.

Yet another objective of the present invention is to realize a fuel tank cover assembly which does not create marks that can cause quality problem on the surface.

### Detailed Description of the Invention

A fuel tank cover assembly realized to fulfill the objectives of the present invention is illustrated in the accompanying figures, in which:

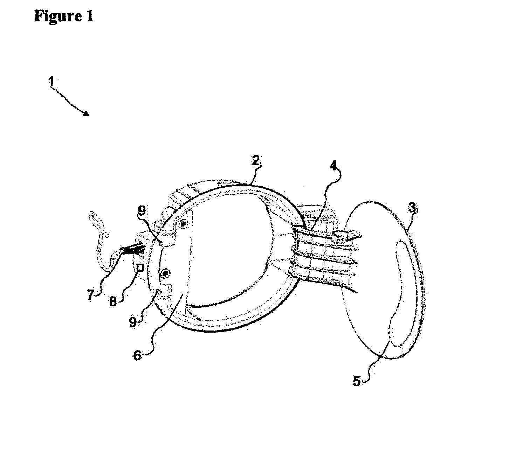

Figure 1 is the perspective view of a fuel tank cover assembly.

The parts illustrated in the figures are individually numbered where the numbers refer to the following:
1. Fuel tank cover assembly
2. Body
3. Cover
4. Connection member
5. Metal plate
6. Electromagnet
7. Electrical connection
8. Reversing switch
9. Retarder

The inventive fuel tank assembly (1) comprises:
a body (2) which is placed on the vehicle, is hollow and enables the fuel to be filled into the tank through the said opening,
a cover (3) which is connected to the body (2) and enables access to the opening inside the body (2) by opening and closing,
a connection member (4) which enables the cover (3) to be connected to the body (2) and the cover (3) to be opened and closed whenever it is desired,
at least one metal plate (5) which is placed on the side of the cover (3) facing the body (2), and has magnetic property,
at least one electromagnet (6) which mounted on the body (2) such that it will correspond against the metal plate (5), and
at least one electrical connection (7) which is placed on the body (2) and enables the electricity to be given to the electromagnet (6), and
at least one reversing switch (8) which enables the direction of the current generated in the electromagnet (6) to be reversed.

The body (2) is in the form of a hollow ring and fixed to the vehicle by using connection members such as screw and bolt or bonding techniques. The fuel is filled into the vehicle's fuel tank through the opening inside the body (2).

The cover (3) is in the form of a plate that can cover the opening on the body (2). When it is wanted to fill fuel to the vehicle, the opening present on the body (2) is exposed by opening the cover (3) and filling fuel to the tank is performed. After the fuel is filled, the cover (3) is closed in order to prevent the fuel from going out of and the foreign substances from going inside the tank. By this means the opening located on the body (2) is isolated from outside.

The connection member (4) is connected to the body (2) from its one end and to the cover (3) from its other end. By means of the connection member (4) the cover (3) is enabled to move. The said connection member (4) is a spring in one embodiment of the invention.

The metal plate (5) is placed on the surface of the cover (3) facing the body (2). The metal plate (5) present in the inventive fuel tank cover assembly (1) has high electromagnetic property. The said metal plate (5) is preferably manufactured from neodium or alnico. In the preferred embodiment of the invention, the metal plate (5) is placed on the cover (3) such that its positive (+) terminal will face to the body (2).

The electromagnet (6) is placed to the body (2) such that it will correspond to the metal plate (5) by using connection members such as bolt. At least one electrical connection (7) is present on the electromagnet (6) that enables the electromagnet (6) to operate. By means of the said electrical connection (7) the electromagnet (6) provides the necessary electric for it to operate.

The inventive fuel tank cover assembly (1) also comprises at least one retarder (9) on the body (2) which prevents the cover (3) from hitting harshly to the body (2) while the cover (3) is closing. In the preferred embodiment of the invention, the retarder (9) is preferably an EMP seal.

In the inventive fuel tank cover assembly (1), in the case wherein the cover (3) is closed, the electromagnet (6) has negative (-) charge since the surface of the metal plate (5) facing the body (2) has positive (+) charge. By this means, the electromagnet (6) attracts the plate (5), thus the cover (3) and generates the necessary closing force. The attraction force between the electromagnet (6) and the plate (5) depends on the area of the metal plate (5), number of turn on the electromagnet (6) and the amount of the current passing from the electromagnet (6). When the cover (3) is wanted to be opened, the reversing switch (8) is pushed and the electromagnet (6) is charged with positive (+) charge transiently. In this case the electromagnet (6) and the face of the metal plate (5) facing the body (2) have the same charge transiently, therefore the electromagnet (6) repels the metal plate (5) thus the cover (3). So that the plate (5), thus the cover (3), is enabled to be repelled from the body (2). After fuel filling process is finished when the cover (3) is wanted to be closed again, the cover (3) is pushed by hand up to the electromagnetic (6) attraction force and the cover (3) is enabled to be closed by being attracted by the electromagnet (6).

Within the scope of this basic concept, it is possible to develop various embodiments of the inventive fuel tank cover assembly (1). The invention can not be limited to the examples described herein; it is according to the claims.

## Claims

1. A fuel tank cover assembly (1) comprising a body (2) which is placed on the vehicle, is hollow and enables the fuel to be filled into the tank through an opening,
a cover (3) which is connected to the body (2) and enables access to the opening inside the body (2) by opening and closing,
a connection member (4) which enables the cover (3) to be connected to the body (2) and the cover (3) to be opened and closed whenever it is
desired,
at least one metal plate (5) which is placed on the side of the cover (3) facing the body (2), and has magnetic property,
at least one electrical connection (7) which is placed on the body (2) and enables the electromagnet (6) to be given electricity and **characterized by** at least one metal plate (5) which is placed on the cover (3) such that its positive (+) terminal will face the body (2), and which has electromagnetic property
at least one electromagnet (6) which mounted on the body (2) such that it will correspond against the metal plate (5), the current direction of which can be reversed and which is charged with positive (+) charge when the cover (3) is wanted to be opened.

2. A fuel tank cover assembly (1)according to claim 1, **characterized by** reversing switch (8) which enables the direction of the current generated in the electromagnet (6) to be reversed.

3. A fuel tank cover assembly (1) according to any one of the preceding claims, **characterized by** at least one retarder (9) which is located on the body (2) and prevents the cover (3) from hitting harshly to the body (2) while the cover (3) closing.

4. A fuel tank cover assembly (1) according to any one of the preceding claims, **characterized by** retarder (9) which is an EMP seal.

5. A fuel tank cover assembly (1) according to any of the preceding claims, **characterized by** electromagnet (6) which has negative (-) charge in the case wherein the cover (3) is closed.

## Patentansprüche

1. Eine Abdeckanordnung für einen Brennstofftank (1) umfaßt ein Gehäuse (2), welches am Fahrzeug angeordnet und hohl gebildet ist und ermöglicht, dass der Brennstoff durch eine Öffnung in den Tank gefüllt wird,
eine Abdeckung (3), welche am Gehäuse (2) befestigt ist und durch Öffnen und Schließen den Zugang in die Ausnehmung innerhalb des Gehäuses (2) ermöglicht,
eine Verbindungselement (4), welches ermöglicht, dass die Abdeckung an das Gehäuse (2) angeschlossen wird und dass die Abdeckung (3), wann immer gewünscht ist, geöffnet und geschlossen wird,
zumindest eine Metallplatte (5), welche auf der dem Gehäuse (2) zugewandten Seite der Abdeckung (3) angeordnet ist und magnetische Eigenschaften aufweist,
zumindest eine elektrische Verbindung (7), die auf dem Gehäuse (2) angeordnet ist und ermöglicht, dass der Elektromagnet (6) mit Strom versorgt ist und **gekennzeichnet durch**
zumindest eine Metallplatte (5), die an der Abdeckung (3) so angeordnet ist, dass ihr (+) Pluspol dem Gehäuse zugewandt ist und elektromagnetische Eigenschaften aufweist,
zumindest einen Elektromagnet (6), der am Gehäuse (2) dergestalt angeordnet ist, dass er fluchtend mit der Metallplatte (5) ist, deren Stromrichtung reversiert werden kann und welcher **durch** positive (+) Ladung aufgeladen wird, wenn gewünscht wird, die Abdeckung (3) zu öffnen.

2. Eine Abdeckanordnung für einen Brennstofftank (1) gemäß Anspruch 1, **gekennzeichnet durch** mindestens einen Stromumkehrschalter (8), welcher ermöglicht, dass die Richtung des Stroms, der im Elektromagnet (6) erzeugt wurde zu wenden.

3. Eine Abdeckanordnung für einen Brennstofftank (1) gemäß einem der vorhergehenden Ansprüche, **gekennzeichnet durch** mindestens ein Verzögerungsmittel (9), welches am Gehäuse (2) angeordnet ist und ein unangenehmes Klopfen der Abdeckung (3) gegen dem Gehäuse verhindert, wenn die Abdeckung (3) geschlossen wird.

4. Eine Abdeckanordnung für einen Brennstofftank (1) gemäß einem der vorhergehenden Ansprüche, **gekennzeichnet durch** ein Verzögerungsmittel (9), das ein EMP-Dichtung ist.

5. Eine Abdeckanordnung für einen Brennstofftank (1), gemäß einem der vorhergehenden Ansprüche, **gekennzeichnet durch** einen Elektromagnet (6), welcher , in dem Fall, bei dem die Abdeckung (3) verschlossen ist, eine negative (-) Ladung aufweist.

## Revendications

1. Montage du couvercle d'un réservoir à combustible (1) comportant un corps (2) creux, permettant le remplissage de l'intérieur du réservoir avec combustible à travers une ouverture, et placé sur le véhicule,
Un couvercle (3) lié au corps (2) et permettant l'accès à l'ouverture à l'intérieur du corps (2) en s'ouvrant et se fermant,
Un raccord (4) permettant la connexion du couvercle (3) au corps et l'ouverture et fermeture du couvercle (3) en tout cas de besoin,
Au moins une plaque métallique (5) placée sur le côté du couvercle (3) faisant face au corps (2) et possédant la caractéristique magnétique,
Au moins une connexion électrique (7) placée sur le corps (2) et permettant l'alimentation de l'électroaimant de l'électricité et **caractérisée par** au moins une plaque métallique (5) placée sur le couvercle (3) dans une manière que son terminal positive (+) fera face au corps (2) et possédant la caractéristique électromagnétique
Au moins un électroaimant (6) monté sur le corps (2) dans une manière qu'il correspondra contre la plaque métallique (5), la direction du courant pouvant être inversée, étant chargé avec la charge positive (+) quand on désire ouvrir le couvercle (3).

2. Complexe du couvercle d'un réservoir à combustible de véhicule (1) selon la revendication 1, **caractérisé par** un bouton d'inversion (8) permettant l'inversion de la direction du courant produit dans l'électroaimant (6).

3. Montage du couvercle d'un réservoir à combustible (1) selon l'une quelconque des revendications précédentes, **caractérisé par** au moins un retardateur (9) situé sur le corps (2) et empêchant le frappement du couvercle (3) sévèrement sur le corps (2) pendant que le couvercle (3) est en train de se fermer.

4. Montage du couvercle d'un réservoir à combustible (1) selon l'une quelconque des revendications précédentes, **caractérisé par** au moins un retardateur (9) qui est un joint d'EMP.

5. Montage du couvercle d'un réservoir à combustible (1) selon l'une quelconque des revendications précédentes, **caractérisé par** au moins l'électroaimant (6) possédant une charge négative (-) au cas où le couvercle (3) est fermé.
